# EUROPEAN PATENT SPECIFICATION

(11) **EP 3 533 888 B1**
(45) Date of publication and mention of the grant of the patent: **21.07.2021**
(21) Application number: 17863537.1
(22) Date of filing: 11.09.2017
(51) Int. Cl.: C22B 23/00, C22B 3/44, C22B 3/00

(54) **HYDROMETALLURGICAL METHOD FOR NICKEL OXIDE ORE**
HYDROMETALLURGISCHES VERFAHREN FÜR NICKELOXIDERZ
PROCÉDÉ HYDROMÉTALLURGIQUE POUR MINERAI D'OXYDE DE NICKEL

(30) Priority: 26.10.2016 JP 2016209623
(43) Date of publication of application: 04.09.2019
(73) Proprietor: Sumitomo Metal Mining Co., Ltd., Tokyo 105-8716 (JP)
(72) Inventor: TANAKA Masahiro, Tokyo 105-8716 (JP); SAITO Daisuke, Tokyo 105-8716 (JP); OOISHI Takao, Tokyo 105-8716 (JP); KITAZAKI Tooru, Tokyo 105-8716 (JP)
(74) Representative: Jones, Nicholas Andrew
(86) International application number: PCT/JP2017/032705
(87) International publication number: WO 2018/079101

(56) References cited:
- CN-A- 103 725 899
- JP-A- 2009 197 298
- JP-A- 2014 205 901
- JP-A- 2015 227 510
- LOVEDAY B K ED - BRITO-PARADA PABLO: "The use of oxygen in high pressure acid leaching of nickel laterites", MINERALS ENGINEERING, vol. 21, no. 7, 21 February 2008 (2008-02-21), pages 533-538, XP029239048, ISSN: 0892-6875, DOI: 10.1016/J.MINENG.2007.11.002

## Description

### TECHNICAL FIELD

The present invention relates to a hydrometallurgical method for a nickel oxide ore using a high-temperature and high-pressure sulfuric acid leaching method of leaching nickel and cobalt from a nickel oxide ore at high temperature and high pressure using sulfuric acid.

### BACKGROUND ART

As a hydrometallurgical method for recovering valuable metals such as nickel and cobalt from a low grade nickel oxide ore typified by a limonite ore or the like, a high pressure acid leaching (HPAL) method of leaching valuable metals by using an acid such as sulfuric acid at high temperature and high pressure is known.

Specifically, a hydrometallurgical process of obtaining a mixed sulfide of nickel and cobalt from a nickel oxide ore as a raw material by using an HPAL method includes, for example, a pre-treatment step of adjusting a particle size of a raw material ore to form a slurry, a leaching step of performing a leaching treatment by adding sulfuric acid to an ore slurry at high temperature and high pressure, a solid-liquid separation step of separating a leachate and a leach residue from a leach slurry, a neutralization step of subjecting the leachate to a neutralization treatment to remove impurities, a sulfuration step of adding a sulfurizing agent to the leachate subjected to the neutralization treatment to generate a mixed sulfide of nickel and cobalt, and a detoxification step of detoxifying a post-sulfuration liquid.

In the aforementioned hydrometallurgical process, it is known that, in the leaching treatment (leaching step) based on the HPAL method, in addition to nickel and cobalt, other components, such as magnesium, aluminum, iron, and chromium, of elements contained in ore as a raw material are leached according to the following Formula (1).

MO + H₂SO₄ => MSO₄ + H₂O ··· (1)

(M: Ni, Co, Mg, Al, Fe, or Cr)

Of them, since iron existing as goethite [FeO(OH)] in the ore is precipitated as hematite [Fe₂O₃] by a hydrolysis reaction proceeding at a high temperature of 200°C or higher according to the following Formula (2), iron is hardly leached. As described above, iron in the ore is immobilized as hematite in an acid leaching treatment at high temperature and high pressure so that leaching of iron in the leachate can be suppressed. In this respect, it can be said that the acid leaching treatment is excellent as compared to a leaching treatment by a normal pressure leaching method.

Fe³⁺ + 3/2H₂O → 1/2Fe₂O₃ + 3H⁺ ··· (2)

As described above, the HPAL method is an excellent technique capable of selectively leaching nickel and cobalt from ore containing a large amount of iron, but it is difficult to completely suppress leaching of iron and iron is contained on the order of several g/L in the leachate.

Iron in the leachate exists as bivalent iron and trivalent iron, and an absolute amount and an abundance ratio thereof are controlled by an oxidation-reduction potential (ORP) in the leachate. For example, when the oxidation-reduction potential is increased to about 540 mV, the existence form of iron is only trivalent iron, so that iron is immobilized as hematite while generating protons and thus iron does not almost exist. For this reason, when the leaching treatment is performed while the oxidation-reduction potential is increased, an amount of sulfuric acid used can be reduced by generation of protons occurring by an immobilization reaction of immobilizing iron as hematite, and an amount of a neutralizing agent used can be suppressed in the subsequent steps since iron does not exist. However, when the oxidation-reduction potential is increased to be higher than the above value, trivalent chromium is oxidized to harmful hexavalent chromium, which is not preferable. On the other hand, when the oxidation-reduction potential is too low, an oxide coating film in metal lining of a facility is reduced to cause damage to the facility in some cases. As described above, in the leaching treatment, it is desirable that the oxidation-reduction potential of the leachate is appropriately adjusted.

However, the oxidation-reduction potential is largely dependent on the composition of the ore to be subjected to the leaching treatment. For this reason, a technique capable of efficiently suppressing the leaching of iron while controlling the oxidation-reduction potential is demanded.

With respect to such a technical problem, for example, Patent Document 1 proposes a method in which an oxidation-reduction potential of a leachate is controlled by adjusting a mixing ratio of ores having different contents of sulfur and an organic matter (such as a carbon compound), which cause the oxidation-reduction potential to be decreased, to a predetermined range (a range in which the carbon content in solids of the ore slurry is 0.1 to 0.5% by mass), so that leaching of iron can be effectively suppressed, in the leaching treatment by the HPAL method.

Further, Patent Document 2 proposes a method in which an oxidation-reduction potential is controlled by blowing pure oxygen to a reaction container to increase an oxygen partial pressure, so that the leaching of iron is effectively suppressed, in the leaching treatment by the HPAL method. This method is to control the oxidation-reduction potential by replacing some of high pressure air supplied for maintaining the oxygen partial pressure with high pressure oxygen to increase an oxygen purity and maintaining an oxygen blowing amount to a predetermined range.

Patent Document 3 discloses a method that leaches Cuba's nickel cobalt raw material. After pulping Cuba's nickel cobalt raw material with sulphuric acid solution to a liquid-solid ration of 3-6:1, the pulp is leached in an autoclave by pressure oxidation leaching at a temperature of 130-160 °C and a pressure of 0.5 - 0.8 MPa, using industrial pure oxygen as oxygen source, and a reaction time of 2 to 4 hours, and a ratio of 5 to 25 ml sulphuric acid for 200g raw material.

Non-Patent Document 1 shows preliminary leaching tests on a sample of limonitic laterite at 220 [deg.]C, that gave satisfactory recoveries of nickel. It was noted that a significant proportion of the iron remained in solution (about 11 g/l) due to its presence as divalent iron. This was equivalent to about 55 kg per ton of ore or 14% of the iron. The use of oxygen in the leach was investigated as a means of precipitating this iron as hematite and a few tests with oxygen were performed.
Patent Document 1 Japanese Unexamined Patent Application, Publication No. 2009-197298
Patent Document 2: Japanese Unexamined Patent Application, Publication No. 2014-205901
Patent Document 3 Chinese Unexamined Patent Application

CN 10 372 5899 A

### Non-patent Document 1

Loveday, The use of oxygen in high pressure acid leaching of nickel laterites, Minerals Engineering, Vol. 21(7), pp. 533-538, 2008

### DISCLOSURE OF THE INVENTION

### Problems to be Solved by the Invention

However, currently, a quarrying amount of a nickel oxide ore having a large content of an organic matter is increasing, and a nickel oxide ore whose carbon content is difficult to accurately adjust in a range as proposed in the Patent Document 1 is increasing. In the leaching treatment by the HPAL method, since the leaching treatment is directly performed without a roasting step, carbon contained in the nickel oxide ore acts as a reducing agent. By doing so, the oxidation-reduction potential at the time of the leaching treatment is decreased, and thus in practice, it becomes difficult that the oxidation-reduction potential is controlled to 400 to 600 mV.

Further, when the oxidation-reduction potential is decreased in this way, the oxidation reaction of iron is not accelerated, and as a result, a large amount of bivalent iron remains in the leachate. It becomes difficult to separate iron from a crude nickel sulfate-cobalt mixed solution in the subsequent step, or the cost of operation materials necessary for the separation is increased. Furthermore, the corrosion resistance of the reaction container and incidental equipment is also deteriorated.

Further, in the technique of Patent Document 2, the oxidation-reduction potential is controlled to 400 to 600 mV by increasing the oxygen partial pressure of the reaction container, but since a method of adjusting the blowing ratio such that oxygen purity of high pressure air and high pressure oxygen becomes 21 to 60% is employed, an excessive amount of high pressure air and high pressure oxygen is blown. For this reason, the amount of exhaust gas from the reaction container inevitably increases, and accordingly, heat loss increases. Further, as a result, it is necessary to increase an amount of steam blown in order to maintain a temperature in the reaction container, which causes a degradation in energy cost.

The present invention is proposed in view of such circumstances, and an object thereof is to provide a hydrometallurgical method for a nickel oxide ore by which, even in a case where a nickel oxide ore having a high carbon content is to be treated, leaching of iron can be efficiently suppressed, an amount of sulfuric acid used and an amount of a neutralizing agent used are suppressed, and energy cost can be effectively reduced.

### Means for Solving the Problems

The present inventors have conducted intensive studies in order to solve the aforementioned problems. As a result, the present inventors have found that in the leaching treatment by the HPAL method, even in the case of using a nickel oxide ore having a high carbon content, the concentration of oxygen is increased by supplying only high pressure oxygen as a gas to be supplied at the time of the leaching treatment, the leaching of iron can be effectively suppressed by increasing the oxidation-reduction potential to a predetermined range, and the energy cost can be reduced, thereby completing the present invention. Specifically, the present invention provides the following.
(1) A hydrometallurgical method for a nickel oxide ore, including a leaching step of preparing a slurry of a nickel oxide ore having a carbon content of 0.20% by mass or more, adding sulfuric acid to the ore slurry in a reaction container, and subjecting the resultant slurry to a leaching treatment at high temperature and high pressure to obtain a leachate containing nickel and cobalt, in which in the leaching step, an oxidation-reduction potential (Ag/AgCl basis) in the leaching treatment is controlled to 520 mV to 560 mV by supplying only high pressure oxygen.

### Effects of the Invention

According to the present invention, it is possible to provide a hydrometallurgical method for a nickel oxide ore by which, even in a case where a nickel oxide ore having a high carbon content is to be treated, leaching of iron can be efficiently suppressed, an amount of sulfuric acid used and an amount of a neutralizing agent used are suppressed, and energy cost can be effectively reduced.

### BRIEF DESCRIPTION OF THE DRAWINGS

Fig. 1 is a flowchart illustrating a flow of a hydrometallurgical process of a nickel oxide ore by an HPAL method.
Fig. 2 is a graph showing a relation between an oxidation-reduction potential in a leaching treatment and a concentration of bivalent iron (Fe²⁺) contained in a leachate to be obtained.
Fig. 3 is a diagram illustrating an example of a configuration of an autoclave device provided with an oxygen blow pipe.

### PREFERRED MODE FOR CARRYING OUT THE INVENTION

Hereinafter, a specific embodiment of the present invention (hereinafter, referred to as "the present embodiment") will be described in detail. Incidentally, the present invention is not limited to the following embodiment, and various modifications can be made as long as these modifications fall under the scope of the appended claims. Further, in the present specification, the description "X to Y" (X and Y are arbitrary numerical values) means "X or more and Y or less" unless otherwise specified.

### <<1. Outline>>

A hydrometallurgical method for a nickel oxide ore according to the present invention (hereinafter, also simply referred to as "hydrometallurgical method") includes a leaching step of preparing a slurry of a nickel oxide ore, adding sulfuric acid to the ore slurry in a reaction container, and subjecting the resultant slurry to a leaching treatment at high temperature and high pressure to obtain a leachate containing nickel and cobalt. Further, in this hydrometallurgical method, an oxidation-reduction potential (Ag/AgCl basis) in the leaching treatment is controlled to 520 mV to 560 mV by supplying only high pressure oxygen in the leaching step.

In such a hydrometallurgical method, even in a case where a high-grade nickel oxide ore having a carbon content of 0.20% by mass or more is used as a raw material, by supplying only high pressure oxygen, the oxidation-reduction potential in the leaching treatment can be controlled to 520 mV to 560 mV. Further, according to this, the most part of iron as a major impurity is oxidized at a high oxidation ratio, and thus iron can be immobilized as a leach residue in the form of hematite. Further, nickel and cobalt can be leached at a high leaching rate while the amount of sulfuric acid used is effectively suppressed.

Further, since the oxygen partial pressure is adjusted by supplying only high pressure oxygen into the reaction container (such as an autoclave device) in which the leaching treatment is performed, as compared to a conventional method of adjusting an oxygen partial pressure while high pressure air is also supplied, the amount of exhaust gas from the reaction container is decreased, so that heat loss can be suppressed. Then, as a result, the amount of high pressure vapor used at the time of leaching can be effectively decreased, so that the energy cost at the time of leaching can be reduced.

### <<2. Hydrometallurgical Method of Nickel Oxide Ore>>

Hereinafter, the hydrometallurgical method of the nickel oxide ore by the HPAL method of the present embodiment will be described in more detail.

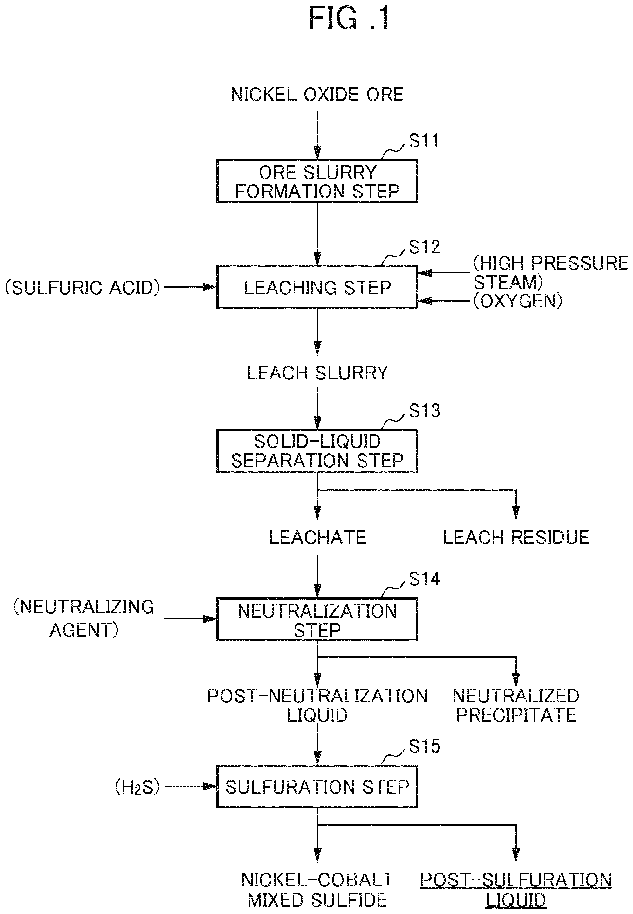

Fig. 1 is a flowchart illustrating a flow of a hydrometallurgical method of a nickel oxide ore by an HPAL method. The hydrometallurgical method of the nickel oxide ore of the present embodiment includes an ore slurry formation step S11 of forming a slurry of a nickel oxide ore as a raw material, a leaching step S12 of leaching the slurry by sulfuric acid at high temperature and high pressure to obtain a leach slurry, a solid-liquid separation step S13 of solid-liquid separating the leach slurry into a leachate and a leach residue, a neutralization step S14 of adding a neutralizing agent to the leachate to obtain a neutralized precipitate containing impurities and a post-neutralization liquid, and a sulfuration step S15 of adding a sulfurizing agent to the post-neutralization liquid to obtain a mixed sulfide of nickel and cobalt and a post-sulfuration liquid.

### (1) Ore Slurry Formation Step

In the ore slurry formation step S11, water is added to the nickel oxide ore as a raw material ore to prepare an ore slurry.

The nickel oxide ore as a raw material is mainly a so-called laterite ore such as a limonite ore and a saprolite ore. According to the invention, a nickel oxide ore having a carbon content of 0.20% by mass or more, is used. Incidentally, regarding the nickel oxide ore as a raw material, as a nickel oxide ore having a high carbon content, a nickel oxide ore having a carbon content of 0.20% by mass to 0.30% by mass is known. Incidentally, the carbon content contained in the nickel oxide ore can be measured using a general carbon-sulfur analyzer which carries out a measurement by high-frequency combustion under oxygen flow and using an infrared absorption method.

Incidentally, the content of nickel in the laterite ore is usually 0.5% by mass to 3.0% by mass and is contained as hydroxide or silica-magnesia (magnesium silicate) mineral. Further, the content of iron is 10% by mass to 50% by mass and iron is mainly in the form of trivalent hydroxide (goethite, FeOOH); however, some bivalent iron is contained in silica-magnesia mineral.

In the ore slurry formation step, for example, the nickel oxide ore as a raw material ore is classified at a predetermined classifying point so that oversized ore particles are removed, and then water is added to undersized ore particles to obtain an ore slurry. The method for classifying the nickel oxide ore is not particularly limited as long as it can classify ores on the basis of a desired particle diameter, and the classification can be performed by sieve classification using a grizzly sieve, a vibration sieve, or the like. Further, also regarding classifying point, a classifying point for obtaining an ore slurry composed of ore particles having a desired particle diameter value or less can be appropriately set.

The slurry concentration of the ore slurry prepared in the ore slurry formation step is not particularly limited since the concentration is greatly dependent on the properties of a nickel oxide ore to be treated, but a higher slurry concentration of the ore slurry is preferable, and the concentration is usually adjusted to approximately 25% by mass to 45% by mass. That is, in the case of a slurry concentration of less than 25% by mass, at the time of leaching, a larger size facility is needed in order to obtain the same residence time, and the amount of acid added increases for preparation of a residual acid concentration. Further, the nickel concentration of a leachate to be obtained decreases. On the other hand, in the case of a slurry concentration of more than 45% by mass, the size of the facility can be reduced, but the viscosity (yield stress) of the slurry itself becomes higher, and accordingly, difficulties in transportation (frequent occurrence of pipe blockages, a need for more energy, and the like) arise.

### (2) Leaching Step

In the leaching step S12, the leaching treatment is performed by adding sulfuric acid to the ore slurry in the reaction container at high temperature and high pressure to obtain a leach slurry which contains a leachate containing nickel and cobalt and a leach residue containing hematite (Fe₂O₃).

Specifically, in the leaching step S12, leaching reactions expressed by the following formulas (3) to (5) and high temperature hydrolysis reactions expressed by the following formulas (6) and (7) occur, whereby nickel, cobalt, and the like are leached as a sulfate and a leached iron sulfate is immobilized as hematite.

### "Leaching Reaction"

MO + H₂SO₄ => MSO₄ + H₂O · · · (3)

(Incidentally, M in the formula represents Ni, Co, Fe, Zn, Cu, Mg, Cr, Mn, or the like.)

2FeOOH + 3H₂SO₄ => Fe₂(SO₄)₃ + 4H₂O · · · (4)

FeO + H₂SO₄ => FeSO₄ + H₂O ··· (5)

### "High Temperature Hydrolysis Reaction"

2FeSO₄ + H₂SO₄ + 1/2O₂ => Fe₂ (SO₄) ₃ + H₂O · · · (6)

Fe₂(SO₄) ₃ + 3H₂O => Fe₂O₃ + 3H₂SO₄ · · · (7)

Herein, in the leaching treatment in the leaching step S12, it is characterized in that, by supplying only high pressure oxygen, the oxidation-reduction potential (ORP, Ag/AgCl basis) in the leaching treatment is controlled to a predetermined range. According to the invention, by supplying high pressure oxygen to the ore slurry with which the reaction container is loaded, the oxidation-reduction potential in the leaching treatment is controlled to a range of 520 mV to 560 mV.

By performing such a leaching treatment, even in a case where a nickel oxide ore having a carbon content of 0.20% by mass or more is used as a raw material, by supplying only high pressure oxygen, the oxidation-reduction potential can be properly and stably controlled to a range of 520 mV to 560 mV. Further, according to this, the most part of iron as a major impurity is oxidized at a high oxidation ratio, and thus iron can be immobilized as a leach residue in the form of hematite. Further, nickel and cobalt can be leached at a high leaching rate while the amount of sulfuric acid used is effectively suppressed.

The oxidation-reduction potential in the leaching treatment is, as described above, controlled to 520 mV to 560 mV, and is preferably controlled to 530 mV to 550 mV.

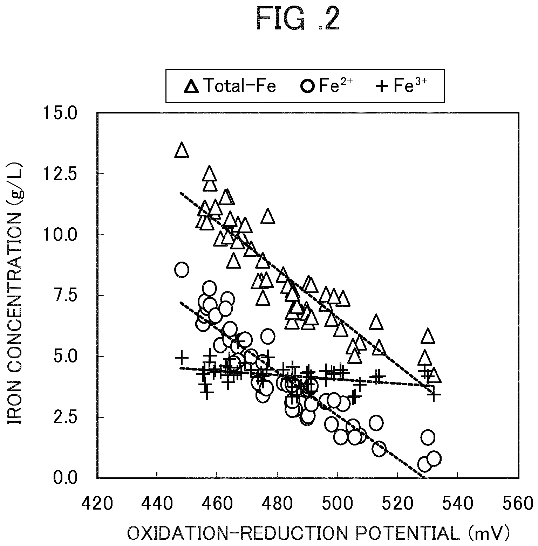

Herein, Fig. 2 is a graph showing a relation between an oxidation-reduction potential in a leaching treatment and a concentration of bivalent iron (Fe²⁺) contained in a leachate to be obtained. As shown in Fig. 2, according to the studies of the present inventors, it is found that by controlling the oxidation-reduction potential in the leaching treatment to a range of 520 mV to 560 mV, the concentration of Fe²⁺ can be extremely decreased. According to this, the amounts of the sulfuric acid and the neutralizing agent to be used in the neutralization treatment with respect to the obtained leachate can be effectively decreased.

When the oxidation-reduction potential is less than 520 mV, an oxide coating film in metal lining of a facility is reduced to cause damage to the facility in some cases. Further, the high temperature heat hydrolysis reaction of iron is suppressed, whereby a large amount of iron remains in a leachate, the amount of a chemical agent used in the subsequent step of the neutralization step and the coprecipitation amount of nickel and cobalt increase, so that the leaching rate of nickel and cobalt is decreased. On the other hand, in a case where the oxidation-reduction potential is more than 560 mV, chromium contained in a nickel oxide ore is leached in a state where the chromium is oxidized to be hexavalent. When the hexavalent chromium is leached, in order to remove the hexavalent chromium in the neutralization step and a wastewater treatment step, the chromium needs to be reduced to be trivalent using a reducing agent, and accordingly, an increase in smelting cost is inevitable. Unless reduction to trivalent is performed, a problem arises in that chromium is contained as an impurity in a nickel or cobalt product, or chromium remains in a post-waste-water-treatment solution. Further, when the oxidation-reduction potential is more than 560 mV, the pressure in the reaction container increases, which is disadvantageous in terms of energy cost.

Incidentally, in the leaching treatment in the leaching step S12, the amount of high pressure oxygen supplied may be adjusted such that the oxidation-reduction potential becomes 520 mV to 560 mV while the oxidation-reduction potential (oxidation-reduction potential) in the leachate is monitored.

Further, in the leaching treatment, in a case where there is no change in the amounts of various additives (for example, an ore slurry, high pressure vapor, and the like), the pressure in the reaction container is increased by the amount of high pressure oxygen supplied. For this reason, it is desirable to adjust the reaction temperature or to adjust the amount of high pressure oxygen supplied such that the total pressure does not increase excessively. However, in a case where the reaction temperature is decreased to perform pressure adjustment, there is a possibility that a high nickel leaching rate is not obtainable, so that it is more preferable to adjust the amount of high pressure oxygen supplied. In this way, by managing the oxygen partial pressure by using only high pressure oxygen, as compared to a case where the oxygen partial pressure is increased using high pressure air (containing about 21% of oxygen) like the related art, the oxygen partial pressure can be increased by a smaller amount of high pressure oxygen supplied, it is advantageous in view of pressure management of a facility, and the energy cost can also be reduced.

Incidentally, it is preferable to achieve a desired oxidation-reduction potential with a smaller amount of high pressure oxygen supplied, and from this point of view, in order to confirm that the oxygen partial pressure reaches a target oxygen partial pressure, it is desirable to monitor the oxygen concentration by a vent line for facility pressure adjustment.

Specifically, the amount of high pressure oxygen supplied is not particularly limited, but is set preferably to 120 Nm³/hr to 180 Nm³/hr and more preferably to 130 Nm³/hr to 160 Nm³/hr. In the present embodiment, since the oxygen partial pressure is adjusted by only high pressure oxygen, as compared to a case where the oxygen partial pressure is adjusted by concurrently using high pressure air like the related art, the total amount of gas supplied can be decreased to about 180 Nm³/hr or less. From this, the amount of exhaust gas from the reaction container can be effectively decreased, and heat loss can be suppressed. Further, since heat loss can be suppressed, the amount of high pressure vapor used in the leaching treatment can be decreased, and the energy cost can be reduced. Incidentally, the amount of high pressure vapor used can be set, for example, to about 150 kg to 200 kg per ton of dry ore.

Incidentally, when the amount of high pressure oxygen supplied is less than 120 Nm³/hr, the oxidation-reduction potential in the leaching treatment is difficult to control to the aforementioned desired range.

The temperature condition in the leaching treatment is not particularly limited, but is set preferably to about 220°C to 280°C and more preferably to about 240°C to 270°C. When the reaction is performed at such a temperature range, iron can be more efficiently immobilized as hematite. When the temperature is lower than 220°C, since the speed of high temperature heat hydrolysis reaction is slow, dissolved iron remains in a reaction solution, whereby the load on the subsequent step of the neutralization step for removing iron increases and it becomes difficult to separate iron from nickel. On the other hand, when the temperature is higher than 280°C, the high temperature heat hydrolysis reaction itself is accelerated, but not only difficulties in selection of a material for a container to be used in high temperature and high pressure leaching but also an increase in the cost of high pressure vapor for temperature increase are caused, which is not preferable.

The control of temperature can be performed, for example, by supplying high pressure vapor into the reaction container. Further, regarding the pressure condition in the reaction container, for example, the pressure is preferably increased to about 3 MPaG to 6 MPaG. The pressure in the reaction container can be controlled by supplying the aforementioned high pressure vapor together with high pressure oxygen. Incidentally, in the leaching treatment performed under such temperature and pressure conditions, a pressurized reaction container such as an autoclave device is used as the reaction container.

The amount of sulfuric acid added to be used in the leaching treatment is not particularly limited, but for example, is set preferably to about 200 to 250 [kg-H₂SO₄/t-dry Solid] per ton of dry ore. When the amount of sulfuric acid added per ton of dry ore is too large, the cost involved in the use of sulfuric acid increases, and the amount of neutralizing agent used in the subsequent step of the neutralization step increases, which is not preferable.

Further, the pH of a leachate to be obtained is preferably adjusted to 0.1 to 1.0 from the viewpoint of the filterability for separating a leach residue containing the generated hematite.

### (3) Solid-Liquid Separation Step

In the solid-liquid separation step S13, multistage washing is applied to the leach slurry generated in the leaching step S12 to solid-liquid separate the leach slurry into a leachate containing nickel and cobalt and a leach residue as hematite.

In the solid-liquid separation step S13, the leach slurry is mixed with a washing liquid, and then a solid-liquid separation treatment is performed using a solid-liquid separation apparatus such as a thickener. Specifically, first, the slurry is diluted by a washing liquid, and then, the leach residue in the slurry is condensed as a precipitate in a thickener. According to this, the amount of nickel adhering to the leach residue can be decreased depending on the degree of the dilution. In actual operations, thickeners having such a function are multistage-connected and used.

### (4) Neutralization Step

In the neutralization step S14, the pH is adjusted by adding a neutralizing agent to the leachate, thereby obtaining a neutralized precipitate containing an impurity element and a post-neutralization liquid. According to such a neutralization treatment, valuable metals such as nickel, cobalt, and scandium are contained in the post-neutralization liquid, and the most part of impurities including aluminum becomes the neutralized precipitate.

As a neutralizing agent to be used in the neutralization treatment, a known neutralizing agent can be used. Examples thereof include limestone, slaked lime, and sodium hydroxide. Further, in the neutralization treatment, the pH is preferably adjusted to a range of 1 to 4 and more preferably to a range of 1.5 to 2.5 while preventing oxidation of the separated leachate. When the pH is less than 1, neutralization may be insufficient, and the neutralized precipitate and the post-neutralization liquid may not be separated. On the other hand, when the pH is more than 4, not only impurities including aluminum but also valuable metals such as nickel may be contained in the neutralized precipitate.

### (5) Sulfuration Step

In the sulfuration step S15, a sulfurizing agent is added to the post-neutralization liquid obtained from the neutralization treatment to obtain a mixed sulfide of nickel and cobalt and a post-sulfuration liquid. According to such a sulfuration treatment, nickel, cobalt, zinc, and the like are recovered as sulfides, and other element such as scandium remains in the post-sulfuration liquid.

Specifically, in the sulfuration step S15, a sulfurizing agent such as hydrogen sulfide gas, sodium sulfide, or hydrogenated sodium sulfide is added to the obtained post-neutralization liquid to generate a mixed sulfide containing nickel and cobalt with less impurity components (nickel-cobalt mixed sulfide) and a post-sulfuration liquid (barren liquor) having a low and stabilized level of concentration of nickel or the like.

In the sulfuration treatment in the sulfuration step S15, a slurry containing the nickel-cobalt mixed sulfide is subjected to a separation treatment using a precipitation apparatus such as a thickener to separate and recover the mixed sulfide from the bottom of the thickener. Meanwhile, the post-sulfuration liquid as an aqueous solution component is overflowed for recovery.

Incidentally, in a case where zinc is contained in the post-neutralization liquid to be provided to the sulfuration treatment, before separating nickel and cobalt as sulfides, zinc can be selectively separated as a sulfide.

### <<3. Reaction Container (Autoclave Device) to Be Used in Leaching Treatment>>

Next, the reaction container to be used in the leaching treatment in the hydrometallurgical method for a nickel oxide ore will be described. As described above, in the leaching treatment in the leaching step S12, acid leaching is performed using sulfuric acid while high pressure oxygen is supplied at high temperature and high pressure. Further, at this time, the structure of the reaction container to be used in the leaching treatment and the material thereof are preferably selected in consideration of corrosion resistance and oxygen combustion resistance and from the viewpoint of general versatility (such as continuous availability) of the material. In particular, in the present embodiment, since only high pressure oxygen having a high pure oxygen concentration is supplied as a gas component, attention is preferably paid to safety.

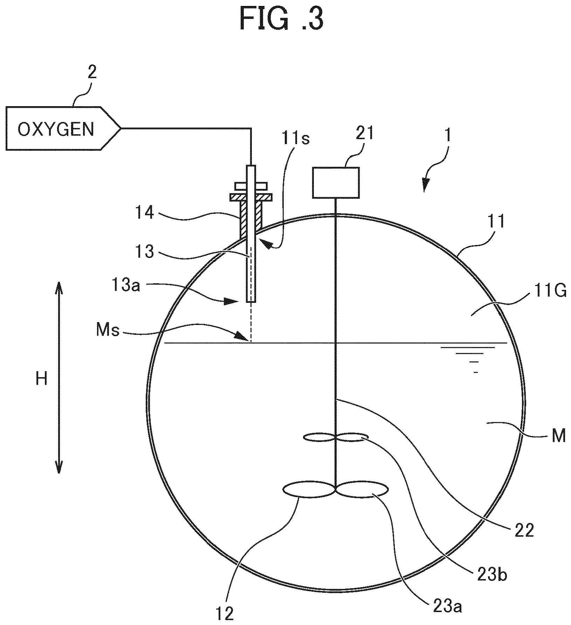

Fig. 3 is a diagram illustrating a configuration of an autoclave device as the reaction container to be used in the leaching treatment, and is a cross-sectional view schematically illustrating an internal structure obtained by vertically cutting the autoclave device.

### (Configuration of Autoclave Device)

An autoclave device 1 is a reaction container in which an ore slurry M as a metal raw material is loaded and a leaching treatment of leaching a metal contained in the ore is performed by supply of sulfuric acid at high temperature and high pressure. This autoclave device 1 includes a main body portion 11 that has an ore slurry M loaded therein and is a leaching reaction field, and a stirrer 12 that stirs the ore slurry M. In addition, an oxygen blow pipe 13 that blows oxygen to the ore slurry M is provided in the autoclave device 1.

### (Main Body Portion)

As described above, the main body portion 11 has the ore slurry M loaded therein and is a reaction field in which the leaching reaction by sulfuric acid occurs. The main body portion 11 is, although not illustrated in the drawing, for example, partitioned in a plurality of compartments by partition walls, the leaching reaction occurs in each compartment, and the ore slurry M is overflowed and transferred from the upstream compartment to the downstream compartment.

In the inside of the main body portion 11 (the inside of each compartment), for example, various supply pipes, such as a sulfuric acid supply pipe that supplies a sulfuric acid solution to be used in the leaching treatment while drooping from the upper portion of the main body portion, a slurry inlet pipe for loading an ore slurry M to be treated in the compartment on the uppermost stream, and a steam supply pipe for supplying high-pressure steam or the like, are attached.

Herein, in the main body portion 11 of the autoclave device 1, although not particularly limited, at least the wall surface inside the main body portion (inner wall) is preferably made of a material containing titanium (Ti). Since the leaching reaction by sulfuric acid occurs at high temperature and high pressure as described above in the main body portion 11, the wall surface is preferably made of a material having corrosion resistance, and particularly, by the wall surface being made of Ti, corrosion resistance thereof can be enhanced.

### (Stirrer)

The stirrer 12 is disposed inside the main body portion 11, and for example, in a case where the inside of the main body portion 11 is partitioned in a plurality of compartments by partition walls, the stirrer 12 is disposed in each of the compartments. The stirrer 12 stirs the ore slurry M loaded inside the main body portion 11.

As the stirrer 12, for example, as schematically illustrated in Fig. 3, it is possible to use a propeller-shaped stirrer provided with a stirring shaft 22 connected to a motor 21 and stirring blades 23 disposed at end portions of the stirring shaft 22. The stirrer 12 droops from the ceiling above the main body portion 11, and the stirring shaft 22 can be provided to be positioned at the center portion in the reaction space when the autoclave device 1 is viewed from the upper portion.

The stirrer 12 rotates the stirring shaft 22 at a predetermined speed, for example, clockwise by driving of the motor 21 and stirs the ore slurry M by the stirring blades 23. As illustrated in Fig. 3, the stirring blades 23 (23a and 23b) can be provided in plural in the vertical direction in the end portions of the stirring shaft 22.

### (Oxygen Blow Pipe)

The oxygen blow pipe 13 is a pipe for blowing and supplying a high concentration of oxygen to the ore slurry M. The oxygen blow pipe 13 is, for example, provided to droop from the ceiling above the main body portion 11. Specifically, the oxygen blow pipe 13 is provided to be fixed to a flange 14 provided at the upper portion of the main body portion 11. This oxygen blow pipe 13 is connected to an oxygen generating facility 2, and oxygen generated in the oxygen generating facility 2 is supplied into the main body portion 11 through the oxygen blow pipe 13.

Herein, in the oxygen blow pipe 13, oxygen is discharged from the oxygen outlet 13a thereof. At this time, in the autoclave device 1, the oxygen blow pipe 13 is disposed such that the oxygen outlet 13a is positioned at a gas phase portion (space indicated by symbol "11G" in Fig. 3) in the main body portion 11 in which the ore slurry M is loaded. That is, the oxygen outlet 13a is disposed in a state of not coming in contact with the liquid level Ms of the ore slurry M, and oxygen is blown from the oxygen outlet 13a positioned at the gas phase portion 11G toward the liquid level Ms of the ore slurry M in the main body portion 11.

In the autoclave device 1 having such a configuration, the oxygen outlet 13a of the oxygen blow pipe 13 is positioned at the gas phase portion 11G in the main body portion 11, so that oxygen is blown to the gas phase portion 11G and then oxygen blown to the gas phase portion 11G is gradually incorporated in the ore slurry M so as to be dissolved. Therefore, for example, by controlling the amount of oxygen supplied through the oxygen blow pipe 13, the oxidation-reduction potential can be appropriately controlled in a desired range.

Further, since the oxygen outlet 13a of the oxygen blow pipe 13 is provided to be positioned at the gas phase portion 11G, a problem does not arise in that the slurry containing sulfuric acid or the like reversely flows in the pipe by the oxygen outlet in the oxygen blow pipe being inserted in a liquid phase and oxygen being blown directly to the liquid phase, so that a decrease in leaching rate of nickel and cobalt can be suppressed.

Further, in the autoclave device 1, since the leaching treatment is performed using sulfuric acid, for example, at a high temperature of about 220°C to 280°C while oxygen is blown through the oxygen blow pipe 13, a possibility that corrosion occurs inside the autoclave device 1 is considered. For this reason, as for such an autoclave device 1 performing the leaching treatment, as described above, from the viewpoint of enhancing corrosion resistance, the autoclave device is preferably made of a material containing Ti.

However, it is known that, in the case of a reaction container made of Ti, when gas in which the oxygen concentration is increased is allowed to pass through the reaction container, the gas reaches an ignition point of Ti so that combustion occurs. For this reason, in a case where the device inner wall or the like in the autoclave device 1 is made of Ti, it is demanded that oxygen to be blown from the oxygen blow pipe 13 to the inside of the main body portion 11 is supplied without oxygen being brought into contact with the inner wall made of Ti.

For this reason, in the autoclave device 1, the oxygen outlet 13a of the oxygen blow pipe 13 is preferably disposed to be separated from the wall surface 11s inside the main body portion 11 of the autoclave device 1. Specifically, as illustrated in Fig. 3, the oxygen outlet 13a is preferably disposed at a substantially intermediate point between a wall surface 11s in the main body portion 11 and a liquid level Ms of the ore slurry M as a position in a height direction (arrow H direction in Fig. 3) of the autoclave device 1.

The gas phase portion 11G in the main body portion 11 of the autoclave device 1 is made of a mixed gas of steam and oxygen, but the most part thereof is steam and the average molecular weight is estimated to be about 20. Meanwhile, since oxygen to be supplied through the oxygen blow pipe 13 has a large specific gravity and is cold, when oxygen is supplied to the gas phase portion 11G inside the main body portion 11 toward the liquid level Ms of the ore slurry M, oxygen flows in the direction of the liquid level Ms directly. Therefore, oxygen to be supplied is not brought into direct contact with the wall surface 11s inside the autoclave device 1, that is, the wall surface made of Ti.

As the material of the oxygen blow pipe 13, from the viewpoint of securing corrosion resistance at high temperature and high pressure and preventing combustion by oxygen passing in the pipe, for example, a nickel-chromium-molybdenum (Ni-Cr-Mo) alloy is preferably used. The Ni-Cr-Mo alloy optionally includes manganese, silicon, cobalt, tungsten, tantalum, iron, and the like, and examples thereof include 58Ni-22Cr-13Mo-3W-3Fe (commercially available product: HASTELLOY C-22), 60Ni-19Cr-19Mo-2Ta (commercially available product: MAT21), and 53Ni-45Cr-1Mo (commercially available product: MC Alloy).

### EXAMPLES

Hereinafter, the present invention will be described in more detail by means of Examples of the present invention, but the present invention is not limited to the following Examples at all. Incidentally, metals used in Example and Comparative Examples were analyzed using ICP emission spectroscopy.

### [Example 1]

A nickel oxide ore having a carbon content of 0.25% by mass, a nickel grade of 1.25% by mass, and an iron grade of 46% by mass was made into an ore slurry having a solid content of about 40% by mass, and the ore slurry was fed into an autoclave reaction container made of titanium and having a capacity of 430 m³. Then, sulfuric acid was added to the ore slurry so as to attain a free sulfuric acid concentration of about of 45 g/L in a post-reaction solution, and then the resultant slurry was subjected to the leaching treatment.

At this time, in the autoclave reaction container, the slurry was stirred while about 5 MPaG of high pressure oxygen was blown at a blowing amount of 150 Nm³/hr, and then the operation was performed at a temperature of 245°C. Incidentally, the temperature in the reaction container was maintained by blowing about 5 MPaG of high pressure vapor. The amount of the high pressure vapor used was 200 kg per ton of dry ore.

The iron concentration and the oxidation-reduction potential (ORP, Ag/AgCl basis) of the leach slurry obtained by such a leaching treatment were measured. Incidentally, the iron concentration of the leach slurry was measured as follows. That is, a calcium carbonate slurry was added to the obtained leach slurry to remove trivalent iron by oxidation and neutralization, whereby the concentration of bivalent iron remaining in a solution was analyzed. Thereafter, the total iron concentration of the leachate in the leach slurry, the bivalent iron concentration of the post-neutralization liquid, and the trivalent iron concentration of the leachate obtained by counting backwards from a solution amount were obtained.

### [Comparative Example 1]

The operation of the leaching treatment was performed in the same manner as in Example 1, except that only high pressure air was supplied without supply of high pressure oxygen, and then the iron concentration and the ORP of the obtained leach slurry were measured.

### [Comparative Example 2]

The operation of the leaching treatment was performed in the same manner as in Example 1, except that both high pressure air and high pressure oxygen were supplied, and then the iron concentration and the ORP of the obtained leach slurry were measured.

### [Result]

The leaching treatment conditions in Example and Comparative Examples, and the measurement results of the concentration of iron contained in the obtained leach slurry and the ORP are collectively presented in the following Table 1.

**[Table 1]**

| | Amount of high pressure air supplied [Nm³/hr] | Amount of high pressure oxygen supplied [Nm³/hr] | Oxygen purity [%] | ORP [mV] | Bivalent iron concentration [g/L] | Trivalent iron concentration [g/L] | Amount of sulfuric acid used [%] | Amount of neutralizing agent used [%] |
|---|---|---|---|---|---|---|---|---|
| Example 1 | 0 | 150 | 100 | 540 | 1.3 | 3.9 | 92 | 92 |
| Comparative Example 1 | 150 | 0 | 21 | 460 | 6.2 | 4.2 | 100 | 100 |
| Comparative Example 2 | 50 | 100 | 74 | 500 | 3.9 | 4.0 | 96 | 96 |

As presented in Table 1, in Example 1 in which the leaching treatment was performed by supplying only high pressure oxygen, as compared to Comparative Example 1 in which only high pressure air was supplied, the oxidation-reduction potential was increased by about 80 mV so as to be 540 mV, the bivalent iron concentration of the leachate was decreased from about 6.2 g/L to 1.3 g/L, and the bivalent iron concentration was decreased from 4.2 g/L to 3.9 g/L. According to this, the amount of sulfuric acid used and the amount of neutralizing agent used were able to be suppressed to 92% as compared to Comparative Example 1. This means that the leaching of iron was suppressed and indicates that the immobilization reaction as hematite was effectively advanced.

On the other hand, in Comparative Example 2 in which the leaching treatment was performed by supplying both high pressure air and high pressure oxygen, as compared to Comparative Example 1 in which only high pressure air was supplied, the oxidation-reduction potential was increased by about 40 mV so as to be 500 mV, the bivalent iron concentration of the leachate was decreased from about 6.2 g/L to 3.9 g/L, and the trivalent iron concentration was decreased from 4.2 g/L to 4.0 g/L. However, the amount of sulfuric acid used and the amount of neutralizing agent used were not suppressed as much as the operation result in Example 1, and the efficient operation was not able to be performed.

From the above results, it was found that, in the leaching treatment at high temperature and high pressure in which a nickel oxide ore having a high carbon content in the ore is to be treated, by supplying only high pressure oxygen, the oxygen partial pressure can be efficiently increased and the oxidation-reduction potential can be controlled to a desired oxidation-reduction potential. Further, as a result, it was confirmed that the leaching of iron can be suppressed and the amounts of the sulfuric acid and the neutralizing agent used can be significantly decreased.

### EXPLANATION OF REFERENCE NUMERALS

- 1: AUTOCLAVE DEVICE
- 11: MAIN BODY PORTION
- 12: STIRRER
- 13: OXYGEN BLOW PIPE
- 13a: OXYGEN OUTLET
- 14: FLANGE

## Claims

1. A hydrometallurgical method for a nickel oxide ore, comprising a leaching step of preparing a slurry of a nickel oxide ore having a carbon content of 0.20% by mass or more, adding sulfuric acid to the ore slurry in a reaction container, and subjecting the resultant slurry to a leaching treatment at high temperature and high pressure to obtain a leachate containing nickel and cobalt, wherein
in the leaching step, an oxidation-reduction potential (Ag/AgCl basis) in the leaching treatment is controlled to 520 mV to 560 mV by supplying only high pressure oxygen.

2. The hydrometallurgical method for a nickel oxide ore according to claim 1, wherein air is not supplied into the reaction container in the leaching treatment.

## Patentansprüche

1. Hydrometallurgisches Verfahren für ein Nickeloxiderz, umfassend einen Auslaugungsschritt zum Herstellen einer Aufschlämmung eines Nickeloxiderzes mit einem Kohlenstoffgehalt von 0,20 Massen-% oder darüber,
Zugeben von Schwefelsäure zur Erzaufschlämmung in einem Reaktionsbehälter, und Ausführen einer Auslaugungsbehandlung an der resultierenden Aufschlämmung bei hoher Temperatur und hohem Druck, so dass ein Auslaugungsprodukt erhalten wird, das Nickel und Cobalt enthält, wobei
im Auslaugungsschritt ein Oxidations-Reduktions-Potential (Ag/AgCI-Basis) bei der Auslaugungsbehandlung durch Zuführen nur von Hochdrucksauerstoff auf 520 mV bis 560 mV geregelt wird.

2. Hydrometallurgisches Verfahren für ein Nickeloxiderz nach Anspruch 1, wobei bei der Auslaugungsbehandlung keine Luft in den Reaktionsbehälter zugeführt wird.

## Revendications

1. Procédé hydrométallurgique pour un minerai d'oxyde de nickel, comprenant une étape de lixiviation de préparation d'une bouillie d'un minerai d'oxyde de nickel ayant une teneur en carbone de 0,20 % en masse ou plus, d'addition d'acide sulfurique à la bouillie de minerai dans un récipient réactionnel, et de soumission de la bouillie résultante à un traitement de lixiviation à une température élevée et sous une pression élevée pour que soit obtenu un lixiviat contenant du nickel et du cobalt, dans lequel
dans l'étape de lixiviation, le potentiel d'oxydoréduction (base Ag/AgCl) dans le traitement de lixiviation est contrôlé à 520 mV à 560 mV par fourniture uniquement d'oxygène sous pression élevée.

2. Procédé hydrométallurgique pour un minerai d'oxyde de nickel selon la revendication 1, dans lequel de l'air n'est pas introduit dans le récipient réactionnel lors du traitement de lixiviation.
